## Europäisches Patentamt
## European Patent Office
## Office européen des brevets

(19)

(11) Veröffentlichungsnummer: **0 143 455**
**B1**

(12) **EUROPÄISCHE PATENTSCHRIFT**

(45) Veröffentlichungstag der Patentschrift: **19.09.90**

(51) Int. Cl.⁵: **H 04 M 3/24, H 04 Q 11/04**

(21) Anmeldenummer: **84114272.2**

(22) Anmeldetag: **26.11.84**

(54) Einrichtung zur Verkehrssimulation.

(30) Priorität: **29.11.83 DE 3343158**

(43) Veröffentlichungstag der Anmeldung:
**05.06.85 Patentblatt 85/23**

(45) Bekanntmachung des Hinweises auf die
Patenterteilung:
**19.09.90 Patentblatt 90/38**

(84) Benannte Vertragsstaaten:
**AT BE CH DE GB IT LI LU**

(56) Entgegenhaltungen:
**DE-A-3 225 823**
**GB-A-2 103 903**
**ELECTRICAL COMMUNICATION, Band 55, Nr. 3,
Seiten 210-216, Heidenheim, DE; R.M.
METZGER et al.: "Universal call simulator for
testing trunk equipment"**
**TELCOM REPORT, Band 4, 1981, Beiheft
"Digitalvermittlungssystem EWSD", Seiten 19-
27, München, DE; R. BORGER et al.: "Periphere
Anschlussgruppen im System EWSD"**

(73) Patentinhaber: **Siemens Aktiengesellschaft
Wittelsbacherplatz 2
D-8000 München 2 (DE)**

(72) Erfinder: **Neuhaus, Dietrich
Danzigerstrasse 26
D-8034 Germering (DE)**
Erfinder: **Obinger, Josef
Erlau 201 L
A-6345 Kössen (AT)**

**Beschreibung**

Die Erfindung betrifft eine Einrichtung zur Verkehrssimulation des Druchgangsverkehrs einer digitalen Zeitmultiplex-Fernsprechvermittlungsstelle.

Verkehrssimulationseinrichtungen werden bei der Inbetriebnahme, bei der Störungssuche und zum Labortest von Fernsprechvermittlungssystemen benötigt. Sie veranlassen in diesem Zusammenhang den Verbindungsaufbau und Verbindungsabbau von Fernsprechverbindungen über das zu überprüfende Vermittlungssystem unter simulierten Betriebsbedingungen und sind in der Lage dabei auftretende Fehler zu erkennen, ggf. zu registrieren und unter Angabe des Zeitpunkts des Auftretens eines Fehlers auszudrucken.

Ein bekannte Verkehrssimulationseinrichtung enthält als wesentliche Bestandteile einen Mikrokomputer zur Steuerung, Teilnehmernachbildungs-Baugruppen, eine Stromversorgung und ein Bedienfeld mit Tasten und Leuchtdiodenanzeige. Nicht zuletzt wegen der mannigfaltigen Prüfmöglichkeiten und der Anpaßbarkeit an unterschiedliche Betriebsbedingungen in verschiedenen Ländern stellt eine derartige Simulationseinrichtung ein relativ aufwendiges Gerät der (siehe auch Elektrical Communication, Band 55, Nr. 3, Seiten 210—216).

Moderne Fernsprechvermittelungsstellen sind häufig modular aus einzelnen Baugruppen aufgebaut, die durch Steckverbindungen miteinander vereinigt sind.

Eine typische solcher Baugruppen eines digitalen Zeitmultiplex-Fernsprechvermittlungssystems ist die Anschlußgruppe, die die Schnittstelle zwischen dem digitalen Koppelnetz einer solchen Vermittlungsstelle und deren analoger und/oder digitaler Umgebung darstellt. Eine solche Anschlußgruppe verfügt über eine eigene, dezentrale Steuerung in Form eines Mikroprozessors, der durch eine periphere Vorverarbeitung von Informationen für den Verbindungsaufbau auch vermittlungstechnische Aufgaben selbständig wahrnimmt und damit zu Entlastung des Zentralprocessors der Vermittlungsstelle beiträgt. Neben den genannten vermittlungstechnischen Aufgaben werden in einer solchen Anschlußgruppe auch sicherungstechnische Aufgaben, wozu eine Fehlererkennung ohne Zuhilfenahme externer Prüfgeräte gehört, und betriebstechnische Aufgaben wahrgenommen, wozu die Umschaltung zwischen den Betriebszuständen "frei", "belegt", und "gesperrt" gehört.

Im Entwicklungs- und im Prüffeldbereich kann es von Interesse sein, einzelne Teile einer Vermittlungsstelle für sich zu prüfen. Zum Zwecke der Überprüfung der genannten Anschlußbaugruppen ist ein Prüfgerät entwickelt worden, das im Prüffall durch eine Steckverbindung mit einer solchen Baugruppe verbunden wird und im Zuge der durchzuführenden Prüfungen, die jeweils bestimmte Funktionsteile betreffen, mit dem Prozessor der Anschlußbaugruppe zusammenarbeitet.

Dem beschränkten Anwendungsgebiet entsprechend ist ein derartiges Prüfgerät naturgemäß wesentlich weniger aufwendig als ein Verkehrssimulationsgerät der eingangs erläuterten Art.

Sofern eine Verkehrssimulation des Durchgangsverkehrs bei einer digitalen Zeitmultiplex-Fernsprechvermittlungsstelle vorgenommen werden sollte, wurde auch zu diesem Zweck die genannte Verkehrssimulationseinrichtung eingesetzt, obwohl diese in erster linie für die Verkehrssimulation bei einer Endvermittlungsstelle konzipiert war. Es wurde daher dabei auch eine Endvermittlungsstelle in den Simulationsprozeß einbezogen, zu der der über die zu untersuchende Durchgangsvermittlungsstelle geführte Verkehr zurückgeschleift wurde.

Die Aufgabe der vorliegenden Erfindung besteht darin, eine Einrichtung zur Verkehrssimulation des Durchgangsverkehrs bei einer Digitalzeitmultiplex-Fernsprechvermittlungsstelle anzugeben, die eine Verkehrssimulation mit dem gegenüber geringerem Aufwand gestattet.

Erfindungsgemäß ist eine solche Einrichtung gekennzeichnet durch eine Anschlußbaugruppe wie sie für den Anschluß einer Mehrzahl von PCM-Übertragungsleitungen an eine solche Vermittlungsanlage Verwendung findet, die neben den eigentlichen Schnittstelleneinheiten u.a. einen mit dem Zentralprozessor der Vermittlungsanlage korrespondierenden Gruppenprozessor als vorverarbeitendes Peripheriesteuerwerk aufweist und die durch eine normalerweise als Prüfbaugruppe für eine solche Anschlußbaugruppe eingesetzte Baugruppe ergänzt ist, die mit dem Gruppenprozessor zusammenarbeitet und deren Betriebsablauf durch entsprechende Änderung ihres Programmspeichers derart gegenüber demjenigen eines Prüfbetriebs der Anschlußbaugruppe geändert ist, daß zwischen der solchenart ergänzten Anschlußbaugruppe und wenigstens einer mit ihr verbundenen gleichartigen jedoch nicht ergänzten Anschlußbaugruppe für PCM-Leitungen der Vermittlungsstelle ein Zeichenaustausch stattfindet, wie er im Zusammenhang mit dem Verbindungsaufbau, dem Bestehen und dem Auslösen von Gesprächsverbindungen gegeben ist.

Die erfindungsgemäße Verkehrssimulationseinrichtung ist also unter Verwendung von Baugruppen aufgebaut, die als solche schon vorhanden sind und nur im Falle der Prüfbaugruppe dadurch geändert werden müssen, daß der Programmspeicher ausgetauscht wird, wozu jedoch konstruktive Veränderungen an der Baugruppe nicht erforderlich sind.

Die erfindungsgemäße Einrichtung wird direkt an wenigstens eine Anschlußbaugruppe für den Anschluß von PCM-Übertragungsleitungen der Fernsprechvermittlungsstelle angeschlossen, deren Durchgangsverkehr simuliert werden soll.

Nachstehend wird die Erfindung anhand von Ausführungsbeispielen unter Bezugnahme auf die Zeichnung näher erläutert.

In der Zeichnung zeigen:

Fig. 1 ein Blockschaltbild der erfindungsgemäßen Einrichtung,

die Figuren 2 bis 4 Blockschaltbilder verschiedener Einsatzmöglichkeiten der erfindungsgemäßen Einrichtung.

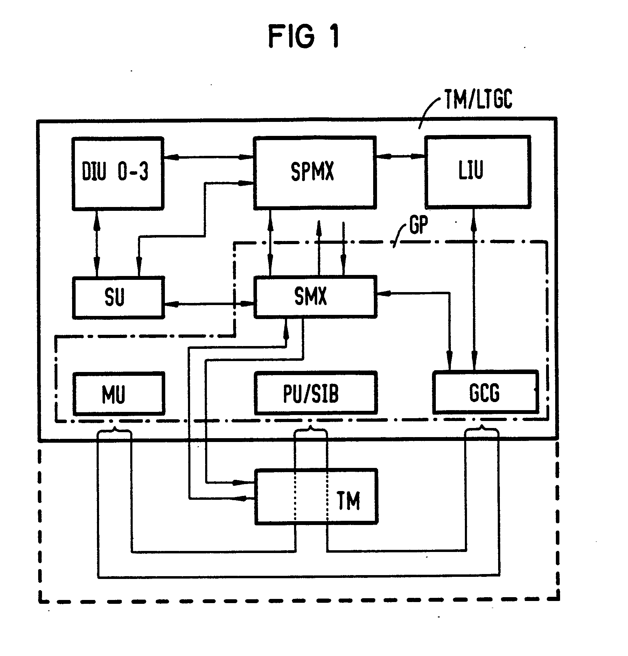

In der Figur 1 sind in einer ausgezogenen Umrahmung die wesentlichen Bestandteile einer Anschlußbaugruppe dargestellt, wie sie normalerweise für den Anschluß einer Mehrzahl von PCM-Übertragungsleitungen an eine digitale Zeitmultiplex-Fernsprechvermittlungsstelle Verwendung findet.

Als Schnittstelle zu den PCM-Übertragungsleitungen weist diese Anschlußbaugruppe hierfür Schnittstelleneinheiten DIUO bis DIU3 auf, an die über ein nicht dargestelltes Leitungsendgerät die PCM-Übertragungsleitungen geschlossen werden.

Als Schnittstelle zwischen der Anschlußbaugruppe und dem Koppelnetz der Vermittlungsstelle, zu der eine solche Anschlußbaugruppe normalerweise gehört, dienen Linkschnittstellen LIU.

Die Durchschaltung zwischen den Schnittstellen DIU und LIU erfolgt über einen Sprachmutliplexer SPMX.

Weiterer Bestandteil der in Figur 1 dargestellten Anschlußbaugruppe ist eine Signaleinheit SU, die unter anderem die Wechselströme erzeugt, die für die Gebührenanzeige beim Teilnehmer benötigt werden. Sie enthält außerdem je nach Bedarf Sender und Empfänger für eine Mehrfrequenz-Code-Signalisierung. Sie ist sowohl mit den erwähnten Anschlußeinheiten DIU als auch mit dem Sprachmultiplexer SPMX über Leitungen verbunden, die mit derselben Bitübertragungsrate betrieben werden wie die angeschlossenen PCM-Übertragungsleitungen.

In der Figur 1 ist ferner in strichpunktierter Umrahmung ein Gruppenprozessor GP angedeutet, der wiederum aus verschiedenen Unterbaugruppen besteht, nämlich aus einer Baugruppe für Verarbeitungseinheit PU, die einen Mikroprozessor enthält, die mit einem Zeichenpuffer SIB in Verbindung steht, einer Speichereinheit MU, die den Programm- und Datenspeicher des Gruppenprozessors enthält, sowie einer Gruppentaktgenerator GCG.

Neben diesen zur Anschlußbaugruppe gehörigen Einheiten zeigt die Figur 1 mit TM bezeichnet eine Baugruppe, wie sie normalerweise als Prüfbaugruppe für eine solche Anschlußbaugruppe eingesetzt wird. Der Anschluß dieser Prüfbaugruppe erfolgt im Prüffall, wie auch hier in der Form, daß die Unterbaugruppe PU/SIB von der Anschlußbaugruppe abgezogen wird, an deren Srelle die Baugruppe TM gesteckt wird, womit Verbindungen zu den Unterbaugruppen MU, GCG und SMX des Gruppenprozessors zustande kommen, und auf diese Baugruppe TM dann die Unterbaugruppe PU/SIB, also der Mikroprozessor aufgesteckt wird.

Gegenüber dem Einsatzfall als Prüfbaugruppe für eine Anschlußbaugruppe ist bei der Baugruppe TM im erfindungsgemäßen Fall der Programmspeicher gegen einen Programmspeicher ausgetauscht, der ein im Hinblick auf die gewünschte Verkehrssimulation geändertes Programm enthält. Unter Umständen kann die Konstellation auch so sein, daß Teile des Ablaufprogrammes der Anschlußbaugruppe, welche dann in der erweiterten Speichereinheit MU abgelegt sind, mitverwendet werden.

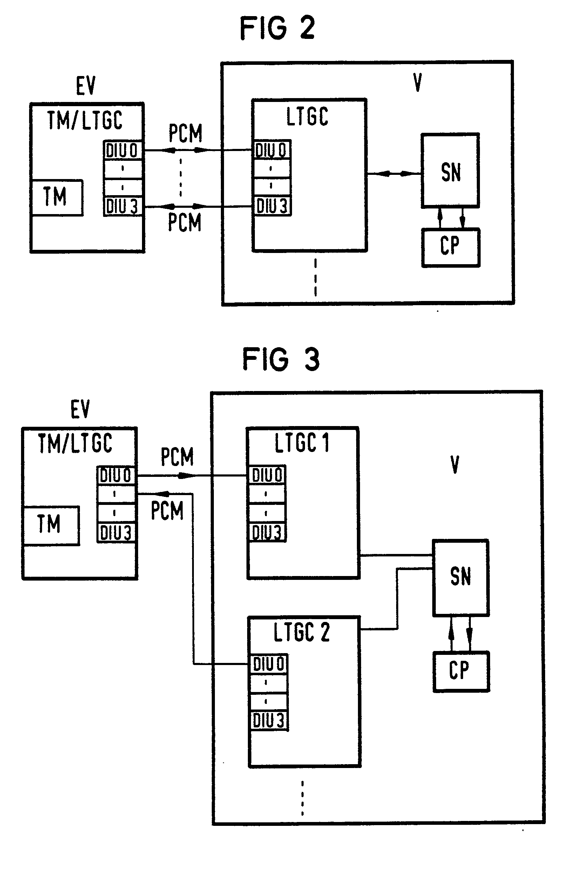

Nachstehend werden unter Bezugnahme auf die Figuren 2 bis 4 bevorzugte Einsatzmöglichkeiten der erfindungsgemäßen Einrichtung näher erläutert.

Bei der Anordnung gemäß Figur 2 kommt eine der erläuterten erfindungsgemäßen Einrichtungen EV, bestehend aus einer Anschlußbaugruppe LTGC für den Anschluß von vier PCM-Leitungen und einer Prüfbaugruppe TM, zum Einsatz. Diese Einrichtung EV ist über wenigsten eine PCM-Übertragungsleitung PCM mit einer von n Anschlußbaugruppen LTGC der Vermittlungsstelle V verbunden, deren Durchgangsverkehr V zu simulieren ist. Von dieser Vermittlungsstelle sind außerdem noch des Koppelnetzwerk SN und der Zentralprozessor CP angedeutet. Wenn mehrere PCM-Übertragungsleitungen Verwendung finden, können die Verbindungen, die über die Vermittlungsstelle V laufen, entweder so aufgebaut sein, daß die Übertragung in Hin- und Rückrichtung über ein und dieselbe PCM-Übertragungsleitung oder aber über verschiedene PCM-Übertragungsleitungen verläuft.

Die Einrichtung zur Verkehrssimulation EV enthält ein Bedienfeld mit Testen, Schalter und Leuchtdiodenanzeige, mit deren Hilfe sowohl bestimmte Mengen von Einzelverbindungen aufgebaut und ausgelöst werden können als auch der Ablauf eines automatischen Simulationsprogramms veranlaßt werden kann.

Unter Verwendung der Leuchtdiodenanzeige des Bausteins TM kann die Anzahl der Verbindungsversuche angezeigt werden, auf den Baueinheiten DIU der Einrichtung EV befindliche Leuchtdioden können dazu ausgenutzt werden, den Zustand der ankommenden PCM-Strecke anzuzeigen, insbesondere ob eine Synchronisierung die Einheit DIU stattgefunden hat oder nicht und ob überhaupt ein Signal empfangen wird.

Beim Einsatzfall gemäß Figur 3 ist ebenfalls nur eine einzige erfindungsgemäße Einrichtung EV vorhanden, die jedoch mit zwei von n Anschlußgruppen LTGC der Vermittlungsstelle V in Verbindung steht, wobei auch hier die Verbindungen wahlweise so aufgebaut sein können, daß Hin- und Rückrichtung über dieselbe Multiplexleitung und Anschlußbaugruppe LTGC oder aber Hin- und Rückrichtung über getrennte Zeitmultiplexleitungen PCM und getrennte Anschlußbaugruppen LTGC verlaufen können. Unter der hier angenommenen Voraussetzung, daß die Anschlußbaugruppen und damit auch die erfindungsgemäße Einrichtung vier Schnittstelleneinheiten DIU aufweisen, sind Verbindungen über vier PCM-Übertragungsleitungen möglich.

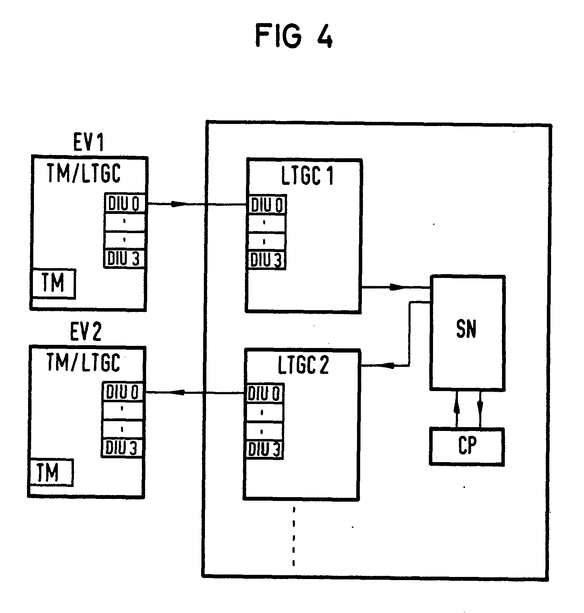

Beim Ausführungsbeispiel gemäß Figur 4 sind zwei Einrichtungen zur Verkehrssimulation EV1 und EV2 vorgesehen, die jeweils mit verschiedenen Anschlußbaugruppen LTGC der Vermittlungsstelle V in Verbindung stehen, wobei die über die Vermittlungsstelle V laufenden Verbindungen vorzugsweise so aufgebaut werden, daß die Übertragung in Hin-Richtung von der ersten Einrichtung EV1 ausgeht und über die Anschlußbaugruppe LTGC1 geführt wird und die Übertragung in Rückwärtsrichtung dieser Verbindung über die Anschlußbaugruppe LTGC2 geführt wird und bei der zweiten Einrichtung EV2 endet. In diesem Fall kann der Verkehr von bis zu 8 PCM-Übertragungsleitungen simuliert werden. Selbstverständlich sind noch weitere Veriationsmöglichkeiten unter Verwendung von mehr als zwei Einrichtungen EV möglich wie auch verschiedene andere Kombinationen der Führung der Übertragung in Hin-Richtung und Rückrichtung.

**Patentansprüche**

1. Einrichtung zur Verkehrssimulation des Durchgangsverkehrs bei einer digitalen Zeitmultiplex-Fernsprechvermittlungsstelle, gekennzeichnet durch eine Anschlußbaugruppe (TM/LTGC), wie sie für den Anschluß einer Mehrzahl von PCM-Übertragungsleitungen an eine solche Vermittlungsanlage (V) Verwendung findet, die neben den eigentlichen Schnittstelleinenheiten (DIU0 bis DIU3) u.a. einen mit dem Zentralprozessor (CP) der Vermittlungsanlage (V) korrespondierenden Gruppenprozessor (GP) als vorverarbeitendes Perpheriesteuerwerk aufweist und die durch eine normalerweise als Prüfbaugruppe für solche Anschlußbaugruppen eingesetzte Baugruppe (TM) ergänzt ist, die mit dem Gruppenprozessor zusammenarbeitet und deren Betriebsablauf durch entsprechende Änderung ihres Programmspeichers derart gegenüber demjenigen eines Prüfbetriebs bei einer Anschlußbaugruppe geändert ist, daß zwischen der solcherart ergänzten Anschlußbaugruppe (TM/LTGC) und wenigstens einer mit ihr verbundenen gleichartigen jedoch nicht ergänzten Anschlußbaugruppe (LTGC1, LTGC2...) für PCM-Leitungen der Vermittlungsstelle (V) ein Zeichenaustausch stattfindet, wie er im Zusammenhang mit dem Verbindungsaufbau, dem Bestehen und dem Auslösen von Gesprächsverbindungen gegeben ist.

2. Einrichtung nach Anspruch 1, dadurch gekennzeichnet, daß ein Teil des Arbeitsspeichers (MU) der Anschlußbaugruppe (TM/LTGC) für die über einen eigenen Propannspeicher verfügende Prüfbaugruppe (TM) verfügbar ist.

**Revendications**

1. Dispositif pour simuler le trafic transitant dans un central téléphonique numérique à multiplexage temporel, caractérisé par un module de raccordement (TM/LTGC), du type utilisé pour le raccordement d'une pluralité de lignes de transmission MIC à un central (V), qui comporte, en dehors des unités d'interface proprement dites (DIU0 à DIU3), notamment un processeur de groupe (GP) qui correspond à un processeur central (CP) du central (V) et est utilisé comme unité de commande périphérique réalisant un prétraitement, et est complété par un module (TM), qui est utilisé normalement en tant que module de contrôle pour de tels modules de raccordement et coopère avec le processeur de groupe et dont le cycle de fonctionnement est modifié au moyen d'une modification correspondante de sa mémoire de programmes par rapport à un cycle de fonctionnement de contrôle dans un module de raccordement, de telle sorte qu'entre le module de raccordement (TM/LTGC) complété de cette manière et au moins un module (LTGC1, LTGC2...), similaire, mais non complété, qui est relié au module complété, pour des lignes MIC du central (V), il se produit un échange de signaux du type déterminé en rapport avec l'établissement, l'existence et la suppression de liaisons téléphoniques.

2. Dispositif suivant la revendication 1, caractérisé par le fait qu'une partie de la mémoire de travail (MU) du module de raccordement (TM/LTGC) est disponible pour le module de contrôle (TM) qui dispose d'une mémoire de programmes particulière.

**Claims**

1. Traffic simulation device for simulating the transit traffic in a digital time-division-multiplex telephone switching centre, characterized by a line module (TM/LTGC), such as is used for connecting a plurality of PCM transmission lines to such a switching system (V), which, in addition to the actual interface units (DIU0 to DIU3) exhibits, inter alia, a group processor (GP), which communicates with the central proceessor (CP) of the switching system (V), as preprocessing peripheral control unit and which is supplemented by a module (TM) normally used as test module for such line modules, which operates in conjunction with the group processor and the operating sequence of which is changed compared with that of a test operation with a line module by a corresponding change in its program memory in such a manner that between the line module (TM/LTGC) supplemented in this manner and at least one similar but not supplemented line module (LTGC1, LTGC2...) connected to it for PCM lines of the switching centre (V) a signal exchange occurs as is given in connection with the setting up of calls, the existence and the releasing of calls.

2. Device according to Claim 1, characterized in that a part of the main memory (MU) of the line module (TM/LTGC) is available for the test module (TM) which has its own program memory.

# FIG 1

# FIG 2

# FIG 3

# FIG 4